# EUROPEAN PATENT APPLICATION

(11) **EP 4 810 262 A1**
(43) Date of publication of application: **23.09.2026**
(21) Application number: 24891203.2
(22) Date of filing: 29.10.2024
(51) Int. Cl.: B41M 5/00, B41J 2/01, C09D 11/30

(54) **INKJET RECORDING METHOD AND INKJET RECORDING DEVICE**

(30) Priority: 14.11.2023 JP 2023193822
(71) Applicant: Mitsubishi Chemical Corporation, Tokyo 100-8251 (JP)
(72) Inventor: INABA, Keisuke, Tokyo 100-8251 (JP); NAKAGAWA, Tomoko, Tokyo 100-8251 (JP)
(74) Representative: Hoffmann Eitle
(86) International application number: PCT/JP2024/038468
(87) International publication number: WO 2025/105162

(57) **Abstract**

An inkjet recording method including a step [a] and a step [b] described below, wherein a recording medium is not heated in the step [a], the recording medium is heated by a heating means in the step [b], and the recording medium is an absorptive recording medium. Step [a]: An ink application step of applying an inkjet ink to a recording medium, wherein the inkjet ink contains at least a polymerizable compound, a polymerization initiator, and water. Step [b]: An irradiation step of irradiating the inkjet ink applied to the recording medium that has undergone at least the step [a] with an active energy ray controlled by a means different from the heating means.

## Description

### Technical Field

The present invention relates to an inkjet recording method and an inkjet recording apparatus.

### Background Art

Inkjet recording methods have features such as easy full colorization, making less noise, low-cost production of high-resolution images, enabling high-speed printing, enabling printing not only on flat surfaces but also on curved surfaces, and enabling easy printing on large areas. Thus, inkjet recording methods are not limited to personal use, and in recent years, the methods are rapidly spreading in commercial inkjet printers for sign applications, window films, posters, car wrapping, wallpaper, and the like.

A method using a solventless UV ink is known as an inkjet recording method. This method provides excellent coating film strength and substrate versatility, but has poor environmental safety, increases the ink thickness due to high viscosity of the ink, and results in poor surface smoothness of a printed film.

In recent years, a recording method using an ultraviolet-curable aqueous ink has also been developed (e.g., Patent Literatures 1 and 2).

The ultraviolet-curable aqueous ink is aqueous and thus is excellent in environmental safety. However, in the case of the ultraviolet-curable aqueous ink, as the ink applied to a recording medium permeates into the recording medium, the cured component also spreads. Even when an active energy ray is applied in this state, the curing components are solidified in a state of being separated from each other without contacting each other. Thus, a problem is poor coating film strength, particularly washing fastness, of the resultant printed product.

This problem is particularly noticeable in the case of an absorptive recording medium.

When heating is performed at the time of applying an ink in order to prevent the permeation of the ink, an inkjet head is warmed, and the ink concentration increases because an aqueous medium is evaporated in the ink. Therefore, the ink viscosity increases, a nozzle is clogged, or the ink is solidified in an ejection port of the nozzle, and thus stable inkjet ejection cannot be expected.

### Citation List

### Patent Literature

Patent Literature 1: JP 2022-067314 A
Patent Literature 2: JP 2011-218571 A

### Summary of Invention

### Technical Problem

An object of the present invention is to provide an inkjet recording method and an inkjet recording apparatus capable of producing a printed coating film having high washing fastness by suppressing an ultraviolet-curable aqueous ink from permeating into a recording medium while maintaining stable inkjet ejection in inkjet recording using the ultraviolet-curable aqueous ink.

### Solution to Problem

The present inventors have found that the above-described problems can be solved by not heating a recording medium in an ink application step of applying an ultraviolet-curable aqueous ink to the recording medium and heating the recording medium in the subsequent irradiation step of an active energy ray.

That is, the gist of the present invention is as follows.
[1] An inkjet recording method including a step [a] and a step [b] described below, wherein a recording medium is not heated in the step [a], the recording medium is heated by a heating means in the step [b], and the recording medium is an absorptive recording medium:
   step [a]: an ink application step of applying, to a recording medium, an inkjet ink containing at least a polymerizable compound, a polymerization initiator, and water; and
   step [b]: an irradiation step of irradiating the inkjet ink applied to the recording medium that has undergone at least the step [a] with an active energy ray controlled by a means different from the heating means.
[2] An inkjet recording method including a step [a] and a step [b] described below, wherein a recording medium is not heated in the step [a], the recording medium is heated by a heating means in the step [b], and a polymerizable compound is present in the form of particles in an inkjet ink in the step [a]:
   step [a]: an ink application step of applying, to a recording medium, an inkjet ink containing at least the polymerizable compound, a polymerization initiator, and water; and
   step [b]: an irradiation step of irradiating the inkjet ink applied to the recording medium that has undergone at least the step [a] with an active energy ray controlled by a means different from the heating means.
[3] The inkjet recording method according to [1] or [2], wherein a light source of the active energy ray is a light-emitting diode having an emission peak wavelength in a range of from 350 to 420 nm.
[4] The inkjet recording method according to [1] or [3], wherein the absorptive recording medium is a fabric.
[5] The inkjet recording method according to [2] or [3], wherein the particles have an average particle size of 10 nm or more and 200 nm or less.
[6] The inkjet recording method according to any of [1] to [5], wherein the polymerizable compound contains a (meth)acrylate compound.
[7] The inkjet recording method according to any of [1] to [6], wherein a heating temperature of the recording medium in the step [b] is 30°C or higher and 70°C or lower.
[8] The inkjet recording method according to any of [1] to [7], wherein a heating element is used as the heating means.
[9] The inkjet recording method according to any of [1] to [8], wherein, in the irradiation step [b], the recording medium is heated from a surface of the recording medium opposite to a surface to which the ink is applied.
[10] An inkjet recording apparatus used for recording an image onto an absorptive recording medium, the apparatus including:
   an ink application means [c] for applying, to the absorptive recording medium, an inkjet ink containing a polymerizable compound, a polymerization initiator, and water without heating the absorptive recording medium;
   an irradiation means [d] for irradiating the inkjet ink applied to the absorptive recording medium with an active energy ray; and
   a heating means [e] for heating the absorptive recording medium during irradiation with the active energy ray,
   wherein the irradiation means [d] and the heating means [e] are individually controllable.
[11] An inkjet recording apparatus used for recording an image onto a recording medium, the apparatus including:
   an ink application means [c] for applying, to the recording medium, an inkjet ink containing a polymerizable compound, a polymerization initiator, and water without heating the recording medium;
   an irradiation means [d] for irradiating the inkjet ink applied to the recording medium with an active energy ray; and
   a heating means [e] for heating the recording medium during irradiation with the active energy ray,
   wherein the irradiation means [d] and the heating means [e] are individually controllable, and
   the polymerizable compound is present in the form of particles in the inkjet ink.
[12] The inkjet recording apparatus according to [10] or [11], wherein a light source of the active energy ray is a light-emitting diode having an emission peak wavelength in a range of from 350 to 420 nm.
[13] The inkjet recording apparatus according to [10], wherein the absorptive recording medium is a fabric.
[14] The inkjet recording apparatus according to [11], wherein the particles have an average particle size of 10 nm or more and 200 nm or less.
[15] The inkjet recording apparatus according to any of [10] to [14], wherein the polymerizable compound contains a (meth)acrylate compound.
[16] The inkjet recording method according to any of [10] to [15], wherein a heating element is used as the heating means [e].
[17] The inkjet recording apparatus according to any of [10] to [15], wherein the heating means [e] is located on a surface of the absorptive recording medium or the recording medium opposite to a surface to which the ink is applied.

### Advantageous Effects of Invention

According to the inkjet recording method and the inkjet recording apparatus of the present invention, in inkjet recording using an ultraviolet-curable aqueous ink excellent in environmental safety, the ultraviolet-curable aqueous ink can be prevented from permeating into a recording medium while stable inkjet ejection is maintained, whereby a printed coating film having high washing fastness can be formed.

Thus, according to the present invention, ink ejection stability in inkjet recording and an improvement in the coating film strength such as washing fastness enable a high-quality printed image to be efficiently formed.

### Description of Embodiments

Hereinafter, an embodiment of the present invention will be described. However, the present invention is not limited to this embodiment.

In the present invention, the expression "from X to Y" (where X and Y are any numerals) is intended to encompass the meaning of "X or more and Y or less", as well as the meaning of "preferably more than X" and "preferably less than Y," unless otherwise specified.

In the present invention, the expression "X or more" (X is any numeral) or "Y or less" (Y is any numeral) is intended to encompass the meaning of "preferably more than X" or "preferably less than Y".

### Inkjet Recording Method

An inkjet recording method according to an embodiment of the present invention (hereinafter may be referred to as an "inkjet recording method 1") is characterized by including the following step [a] and the following step [b], in which a recording medium is not heated in the step [a], the recording medium is heated by a heating means in the step [b], and the recording medium is an absorptive recording medium.

Step [a]: An ink application step of applying an inkjet ink containing at least a polymerizable compound, a polymerization initiator, and water (hereinafter may be referred to as "inkjet ink of the present invention") to a recording medium (hereinafter, the step may be referred to as "ink application step [a]").

Step [b]: An irradiation step of irradiating the inkjet ink applied to a recording medium that has undergone at least the step [a] with an active energy ray controlled by a means different from the heating means (hereinafter, the step may be referred to as "irradiation step [b]").

An inkjet recording method according to another embodiment of the present invention (hereinafter may be referred to as "inkjet recording method 2") is characterized by including the following step [a] and the following step [b], in which a recording medium is not heated in the step [a], the recording medium is heated by a heating means in the step [b], and a polymerizable compound is present in the form of particles in an inkjet ink in the step [a].

Step [a]: An ink application step of applying an inkjet ink containing at least a polymerizable compound, a polymerization initiator, and water, i.e., an inkjet ink of the present invention, to a recording medium, i.e., an ink application step [a].

Step [b]: An irradiation step of irradiating the inkjet ink applied to a recording medium that has undergone at least the step [a] with an active energy ray controlled by a means different from the heating means, i.e., an irradiation step [b].

The inkjet recording method 1 and the inkjet recording method 2 of the present invention (hereinafter, these may be collectively referred to as "inkjet recording method of the present invention") may further include an additional step, if necessary.

For example, the method may include a step of heating a recording medium after the irradiation step [b] (hereinafter may be referred to as an "after-heating step").

The method can also include a pretreatment agent application step of applying a pretreatment agent to a recording medium before the ink application step [a].

### Mechanism

In the inkjet recording method of the present invention, a recording medium is not heated in the ink application step [a], and the recording medium is heated by a heating means in the irradiation step [b].

When the recording medium is heated, an aqueous medium in an ink applied to the recording medium is evaporated.

When heated in the irradiation step [b], the aqueous medium is not completely evaporated and does not become a solid, and the aqueous medium is partially evaporated to increase the concentration of an ink. As a result, the viscosity of the ink is increased. An increase in ink viscosity of the recording medium inhibits the ink from permeating into the recording medium, even though the recording medium is an absorptive recording medium, allowing the ink to be limited to permeation in the vicinity of a surface of the recording medium when the ink is irradiated with an active energy ray. This allows a curable component in the ink to be cured in an integrated state, thereby improving washing fastness of a printed coating film.

In particular, when the recording medium is an absorptive recording medium, the ink is cured while involving fibers in the absorptive recording medium. Therefore, the washing fastness is further improved (inkjet recording method 1).

In addition, when the polymerizable compound is present in the form of particles in an inkjet ink, the ink is likely not to excessively permeate into the recording medium and to remain in the vicinity of the surface even when the recording medium is an absorptive recording medium. As a result, a decrease in image density can be suppressed, and a coating film excellent in washing fastness can be formed (inkjet recording method 2).

In order to evaporate the aqueous medium in the ink, in a case in which the ink is heated between the ink application step [a] and the irradiation step [b] of an active energy ray and not heated in the irradiation step [b], a space for each of the three steps is required on an apparatus, resulting in increased size of the apparatus, which is not preferred.

When heating is continuously performed from the ink application step [a] to the irradiation step [b] of an active energy ray, an ejection head is heated, and the inkjet ejection stability is impaired, as described above.

In contrast, in the present invention, heating is not performed in the ink application step [a], and heating is performed in the irradiation step [b]. Therefore, the aforementioned problems can be solved.

In the present invention, it is only necessary to perform heating in the irradiation step [b] and not to perform heating in the ink application step [a], and a heating time may be present before and after the irradiation step [b].

### Ink Application Step [a]

In the ink application step [a] in the inkjet recording method of the present invention, the inkjet ink of the present invention contained in an ink set is applied on a recording medium from, for example, an inkjet head of an inkjet printer.

A method for applying the inkjet ink of the present invention is not particularly limited as long as the method is capable of applying the inkjet ink in a desired image pattern.

The inkjet system employed in the present invention is a preferred method from the viewpoint of compactification of a recording apparatus and high-speed recording.

That is, an ink application means [c] in the inkjet recording apparatus of the present invention described below is preferably an inkjet printer. The following suitable aspect of the inkjet system corresponds to a suitable aspect of the ink application means [c] in the inkjet recording apparatus of the present invention.

In image formation by the inkjet system, an inkjet ink is ejected onto a recording medium by applying energy to form a colored image.

The inkjet system is not particularly limited and may be a publicly known method, for example, any of a charge control system of ejecting ink by utilizing electrostatic attraction force, a drop-on-demand system (pressure pulse system) utilizing a vibration pressure of a piezoelectric element, and an acoustic inkjet system of converting an electric signal to an acoustic beam, which is irradiated to ink and then ejecting ink by utilizing a radiation pressure.

The inkjet head to be used in the inkjet system may be an on-demand system or a continuous system. Furthermore, an ink nozzle or the like to be used in recording by the inkjet system is also not particularly limited and can be appropriately selected according to the purpose.

The inkjet system according to the present invention includes a system of injecting many small volumes of ink with a low concentration, which is referred to as a photo ink, a system of improving image quality using a plurality of inks with substantially the same hue but different concentrations, and a system of using a colorless and transparent ink.

The inkjet system includes a shuttle system using a short serial head and performing recording while a recording medium is scanned in its width direction; and a line system using a line head in which recording elements are arranged corresponding to the entire region of one side of a recording medium. In the line system, an image can be recorded on the entire surface of a recording medium by scanning the recording medium in a direction orthogonal to the arrangement direction of the recording medium, and the need for a transport system, such as a carriage for scanning a short head can be eliminated. Also, in the line system, the need for complicated scanning control of the movement of the carriage and the recording medium can be eliminated, and only the recording medium is moved, making it possible to increase the recording speed as compared with the shuttle system.

### Irradiation Step [b]

The irradiation step [b] in the inkjet recording method of the present invention is a step performed after the ink application step [a] described above. The irradiation step [b] is a step of irradiating a recording medium to which an inkjet ink is applied with an active energy ray. In the present invention, the recording medium is heated in the irradiation step [b].

An active energy ray source or the like suitable for the irradiation step [b] corresponds to a suitable aspect of an irradiation means [d] of the inkjet recording apparatus of the present invention described below.

With active energy ray irradiation in the irradiation step [b], a polymerizable compound contained in the inkjet ink of the present invention is polymerized by the action of a polymerization initiator to form a cured film of the inkjet ink. As described above, heating in the irradiation step [b] inhibits ink from permeating into a recording medium, and the washing fastness of the printed image to be formed is effectively improved.

As described above, the inkjet ink of the present invention undergoes a curing reaction by active energy ray irradiation. This reaction is a reaction in which a polymerization initiator contained in the inkjet ink of the present invention is decomposed by active energy ray irradiation to generate a radical, to thereby initiate and promote a polymerization reaction of the polymerizable compound to cure the inkjet ink.

When a recording medium is treated with a pretreatment agent preliminarily containing an acidic compound, the inkjet ink is further aggregated (fixed) by an acid supplied from the acidic compound upon this active energy ray irradiation, providing the effect of improving image quality (such as scratch resistance and blocking resistance).

The active energy rays such as α-rays, γ-rays, electron beams, X-rays, ultraviolet light, visible light, and infrared light, are suitable for use. As will be described below, the polymerization initiator to be preferably used in the inkjet ink of the present invention has high absorption particularly to light in an ultraviolet region. From this viewpoint, the emission peak wavelength of an irradiated active energy ray source is preferably in a range from 200 to 600 nm, more preferably in a range from 300 to 450 nm, and still more preferably in a range from 350 to 420 nm.

The number of emission peak wavelengths may be one or plural within the wavelength ranges described above.

The irradiation energy of the active energy ray is 0.1 J/cm² or more and particularly preferably, for example, from 0.5 to 10 J/cm². The irradiation energy equal to or greater than the above-described lower limit allows a polymerization reaction of the polymerizable compound to smoothly proceed, making it possible to provide an even more satisfactory effect of improving the coating film strength.

For the active energy ray source, a mercury lamp, a gas/solid laser, or the like is mainly utilized. For the light source to be used for curing an ultraviolet-curable aqueous ink, a mercury lamp, a halogen lamp, and a metal halide lamp are widely known. However, at present, mercury-free alternatives are strongly desired from the viewpoint of environmental protection. Thus, replacement of these light sources with a GaN-based semiconductor ultraviolet light-emitting device is industrially and environmentally very useful.

In such circumstances, an LED and a laser diode (LD) achieve a small size, a long life, high efficiency, and a low cost, and are expected as an active energy light source in particular for a photocurable inkjet.

In addition, the LED and the laser diode (LD) are preferable in that the lamp life is longer than that of a lamp accompanied by heat generation such as a mercury lamp, a halogen lamp, and a metal halide lamp, and the change in illuminance over time is relatively gentle, facilitating stable printing quality to be achieved.

Thus, in the present invention, an LED and an LD are preferable for use as the active energy ray source. In particular, a UV-LED and a UV-LD can be used as the ultraviolet light source. For example, Nichia Corporation markets a violet LED with a main emission spectrum having a wavelength from 365 nm to 420 nm.

A particularly preferred active energy ray source in the present invention is a UV-LED and is particularly preferably a UV-LED having an emission peak wavelength in a range from 350 to 420 nm.

That is, in the present invention, from the viewpoints of costs and curability, a light-emitting diode having an emission peak wavelength in a range from 350 to 420 nm is preferably used.

In the present invention, the active energy ray source is controlled by a control means different from the heating means for a reason that will be described later.

As described above, in the irradiation step [b], the recording medium is heated by the heating means. This heating means corresponds to a heating means (e) in the inkjet recording apparatus of the present invention described below.

Herein, "heating" means that the heating means applies an amount of heat to a recording medium. More specifically, for example, when the recording medium is heated by using a heating element such as a hotplate as the heating means, a heating element having a power density of 0.05 W/cm² or more is used to apply an amount of heat to the recording medium.

The heating means does not include the active energy ray source described above. That is, there are active energy ray sources that generate heat, such as mercury lamps, but these do not correspond to the heating means.

The reason therefor is as follows.

In case of using an active energy ray source accompanied by heat generation as the heating means, such a heating means is not usually provided with a mechanism for adjusting the heating conditions of the active energy ray source, making it difficult to precisely control the amount of heat applied to the recording medium, and thus the quality stability of the ink coating film to be formed may be deteriorated.

In addition, in a case in which an active energy ray source accompanied by heat generation is used as the heating means, the amount of heat generated depends on the irradiation conditions of the active energy ray, and thus there is a concern that the amount of heat applied to the recording medium is excessive or insufficient under predetermined active energy ray irradiation conditions.

For example, when the amount of heat is insufficient, an aqueous medium in the ink is insufficiently evaporated.

On the contrary, too much heating may result in not only a large energy loss and lowered productivity, but also thermal deterioration such as deformation or discoloration of the recording medium. In addition, curing and drying of the outermost surface of an ink coating film prevents an aqueous medium in a deep portion of a coating film from being evaporated and may instead bring about the drying failure or curing failure.

In particular, in case of using an absorptive recording medium as the recording medium, it is likely to be smudged due to poor drying or poor curing, and thus the temperature control becomes particularly important together with the illuminance control in the irradiation step [b].

Therefore, the active energy ray irradiation conditions and the heating conditions need to be controlled individually.

In the irradiation step [b], the temperature of the recording medium when heated by the heating means together with active energy ray irradiation is not particularly limited as long as an aqueous medium contained in the inkjet ink of the present invention can be smoothly evaporated, but is preferably 30°C or higher, more preferably 35°C or higher, still more preferably 40°C or higher, and particularly preferably 60°C or higher. Meanwhile, this heating temperature is preferably 120°C or lower, more preferably 100°C or lower, still more preferably 80°C or lower, and particularly preferably 70°C or lower.

The heating temperature equal to or higher than the above-described lower limit allows a volatile component such as water in the ink to be effectively evaporated and removed, resulting in a tendency to further enhance the curability. The heating temperature equal to or lower than the above-described upper limit makes it possible not only to prevent thermal deterioration of the recording medium, but also to prevent the reduction in a lifetime of an active energy source due to an increase in temperature.

An excessively high heating temperature allows not only the recording medium but also the vicinity of an ejection head to be heated to elevated high temperatures and may impair ejection stability. The heating temperature of the heating means equal to or lower than the above-described upper limit can suppress ejection failure due to an increase in temperature of the ejection head.

In recent years, in accordance with the trend of reducing the size and weight of various equipment, a more compact recording apparatus is desired, and in this case, the distance between an ink application means and an active energy ray irradiation means is reduced. As a result, the ink application means is easily affected by temperature due to heating. Therefore, as described above, the effect of suppressing the ejection failure by controlling the heating temperature becomes more remarkable.

Here, the heating temperature is a surface temperature of a recording surface of the recording medium.

When a heating element such as a hot plate is used as the heating means, the temperature of the heating element can be regarded as the surface temperature.

From the viewpoint of obtaining a highly precise printed image, the recording medium is preferably heated from the end surface direction of the recording medium that is irradiated with an active energy ray or from a surface opposite to a surface to which the ink is applied, and in particular, it is preferably heated from a surface opposite to the surface to which the ink is applied.

The recording medium may be heated by the combined use of heating means from a plurality of directions.

The heating means, i.e., a heating means [e] described below, is not particularly limited, and may be hot air heating or radiation heating. From the viewpoint of excellent drying efficiency, it is preferable to use a hot air type heating means such as a hot air heater.

Meanwhile, the radiation heating is preferable in that there is no concern about drying an ejection port of an ink nozzle by hot air, and a printed image before fixing is not directly exposed to hot air, facilitating a high-definition printed image to be obtained.

A heating element such as a hot plate, or an infrared heater can be used as the radiation heating means. Furthermore, specific examples thereof include a ceramic heater, a halogen heater, and a quartz tube heater.

Among these, heating using a heating element such as a hot plate is preferable because fine temperature setting is possible and a temperature variation is small.

In the case of heating using a heating element such as a hot plate, heating may be performed by bringing the heating element into direct contact with the recording medium or may be performed by disposing a heat conductor such as a metal plate between the heating element and the recording medium.

The heating may be performed simultaneously with active energy ray irradiation, and a heating time of 20 seconds or shorter may be provided before and after the active energy ray irradiation.

As described above, the after-heating step may be further carried out.

In case of performing the after-heating step, the after-heating step can employ the same heating temperature, heating means, and heating method as those of the heating performed in the irradiation step [b].

### Recording Medium

The recording medium includes an absorptive recording medium and a non-absorptive recording medium. As described above, the problem of the deterioration in washing fastness due to the permeation of the ink is remarkable in the absorptive recording medium, so that the inkjet recording method of the present invention is particularly effective in a case in which the absorptive recording medium is used as the recording medium.

The absorptive recording medium refers to a recording medium having a surface with high ink absorbency. More quantitatively, the absorptive recording medium is defined as a recording medium with an amount of water absorbed of 0.3 g/m² or more from the start of contact to 30 msec^{1/2} after the start in the Bristow method. Meanwhile, the non-absorptive recording medium is defined as a recording medium with an amount of water absorbed less than 0.3 g/m².

Examples of the absorptive recording medium include paper, fabric, non-woven fabric, leather, wood, or composite materials of these. Among the absorptive recording media, a fabric is preferably used because the remarkable effects can be exhibited due to heating upon the active energy ray irradiation according to the present invention.

A material constituting the fabric is not particularly limited, and examples thereof include natural fibers, such as cotton, hemp, wool, and silk; synthetic fibers, such as polypropylene, polyester, acetate, triacetate, polyamide, and polyurethane; and biodegradable fibers, such as polylactic acid. The material may be mixed fibers of these.

Among these, cotton or polyester is preferred, and cotton is more preferred.

Meanwhile, examples of the non-absorptive recording medium include plastic materials including polyesters, such as poly(ethylene terephthalate) (PET), polyolefins, such as poly(vinyl chloride) (PVC), polyethylene (PE), and polypropylene (PP); glass; ceramics, metals; or composite materials of these.

### Inkjet Ink

The inkjet ink of the present invention contains at least a polymerizable compound, a polymerization initiator, and water. That is, in the inkjet recording method of the present invention, an ultraviolet-curable aqueous ink can be used.

### Polymerizable Compound

The polymerizable compound contained in the inkjet ink of the present invention is not particularly limited as long as it is a compound having polymerizability, and a publicly known polymerizable monomer, a polymerizable resin, a polymerizable oligomer, or the like can be used. Among the above, a polymerizable oligomer is preferred, and an ultraviolet-curable oligomer is more preferred.

Specific examples of the polymerizable compound include a (meth)acrylamide compound, a (meth)acrylate compound, a vinyl compound, a maleimide compound, a vinyl sulfone compound, an N-vinylamide compound, and their derivatives. These polymerizable compounds are more preferably bi- or higher functional. The polymerizable compound is more preferably a (meth)acrylamide compound, a (meth)acrylate compound, or a vinyl compound, and particularly preferably a bi- or higher functional (meth)acrylamide compound or (meth)acrylate compound.

In the present invention, the term "(meth)acrylate" means acrylate or methacrylate. The same also applies to "(meth)acryloyl" and "(meth)acryl".

One of these polymerizable compounds may be used singly, or in combination of two or more types thereof. In the case of combining two or more types thereof for use, it is preferable to mix and use two or more selected from a (meth)acrylamide compound, a (meth)acrylate compound, a vinyl compound, a maleimide compound, a vinyl sulfone compound, and an N-vinylamide compound, and it is more preferred that at least one of them is a (meth)acrylamide compound or (meth)acrylate compound.

The polymerizable compound may have a poly(ethyleneoxy) chain, a poly(propyleneoxy) chain, a hydrophilic functional group such as an ionic group (e.g., a carboxyl group or a sulfo group) or a hydroxyl group, in its molecule from the viewpoint of improving the water solubility. A hydrophilic functional group contained in the polymerizable compound allows the dispersibility in an aqueous medium to be improved. Here, the "(poly)ethyleneoxy chain" means an ethyleneoxy chain or a polyethyleneoxy chain. The same applies to the "(poly)propyleneoxy chain".

As the (meth)acrylate compound, any of a monofunctional (meth)acrylate compound (a compound having one (meth)acryloyl group) and a polyfunctional (meth)acrylate compound can be used. A polyfunctional (meth) acrylate compound is preferred.

The ultraviolet-curable oligomer is not particularly limited in terms of the presence or absence of ionicity and may be nonionic or ionic (anionic, cationic, or amphoteric).

Here, "nonionic" means that, for example, a hydrophilic group of the ultraviolet-curable oligomer is composed of an ether bond or a hydroxyl group, which does not ionically dissociate in water.

The "ionic (anionic, cationic, or amphoteric)" means that, for example, the ultraviolet-curable oligomer has a carboxy group or an amino group, which can ionically dissociate in water.

The ultraviolet-curable oligomer is, for example, preferably any of the following <1> to <3>.
<1> An oligomer having a structural unit derived from a compound represented by Formula (1) below. 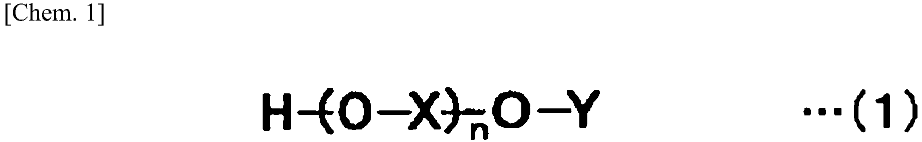 (In Formula (1), X is an alkylene group; Y is any of a (meth)acryloyl group, an allyl group, an acyl group, and a hydrogen atom; and n is an integer of 2 or more.)
<2> An oligomer having a structural unit derived from a polyisocyanate compound (A), the compound (A) being a compound having three or more isocyanate groups in one molecule.
<3> An oligomer having a structural unit derived from a polyisocyanate compound (A), a structural unit derived from a compound (B') described below, and a structural unit derived from a compound (C') described below.

The ultraviolet-curable oligomer such as <3> above is usually produced by reacting the polyisocyanate compound (A), the compound (B'), and the compound (C').

Compound (B'): A compound containing two or more polymerizable unsaturated bonds and capable of being bonded to the polyisocyanate compound (A).

Compound (C'): A water-soluble compound that can be bonded to the polyisocyanate compound (A).

The ultraviolet-curable oligomer preferably contains a structural unit derived from a (meth)acrylate and particularly preferably contains a structural unit derived from a polyfunctional (meth)acrylate. Furthermore, the ultraviolet-curable oligomer preferably contains a structural unit derived from a polyfunctional (meth)acrylate and a structural unit derived from a polyalkylene glycol. That is, in the ultraviolet-curable oligomer, from the viewpoint of reactivity, the compound (B') is preferably a hydroxyl group-containing polyfunctional (meth)acrylate (B). From the viewpoint of water dispersibility, the compound (C') is preferably a polyalkylene glycol (C). Such an ultraviolet-curable oligomer is usually produced by reacting the polyisocyanate compound (A), the hydroxyl group-containing polyfunctional (meth)acrylate (B), and the polyalkylene glycol (C).

In the present invention, the "structural unit derived from X" means a structural unit that is incorporated into the molecular structure of the ultraviolet-curable oligomer by using a compound X as a raw material and reacting the compound X with another compound. The "structural unit derived from X" is not necessarily limited to a structural unit derived from the compound X used as a raw material. That is, a structural unit formed from a raw material other than X also corresponds to the "structural unit derived from X" when the chemical structure is the same.

As described above, an example of a preferred aspect of the compound (B') includes the hydroxyl group-containing polyfunctional (meth)acrylate (B), but a preferred aspect of the compound (B') may be a "compound (B") containing a hydroxyl group and containing two or more polymerizable unsaturated bonds".

The "compound capable of being bonded to the polyisocyanate compound (A)" in the compound (B') may be a compound obtained by substituting a hydroxyl group of the compound (B") with a carboxy group, an amino group, or the like. Examples of the polymerizable unsaturated bond include a carbon-carbon double bond and a carbon-carbon triple bond, and among these, a carbon-carbon double bond is preferred. A more specific example of the polymerizable unsaturated bond includes a carbon-carbon double bond derived from a vinyl group, a (meth)acryloyl group, or the like.

The water-soluble compound of the compound (C') includes a water-soluble polymer. Specific examples of the water-soluble compound of the compound (C') include a polyglycerin, polyhydroxy (meth)acrylate, polyamine, quaternary-aminated polystyrene, sulfonated polystyrene, polyether, and a polyalkylene glycol. Among these, a polyglycerin, polyhydroxy (meth)acrylate, or a polyalkylene glycol, which is a nonionic water-soluble compound, is preferred, and a polyalkylene glycol is particularly preferred. Each of these water-soluble compounds may be a copolymer.

The compound (C') has a structure of such a water-soluble compound and a structure of a "compound capable of being bonded to the polyisocyanate compound (A)". Here, the structure of the "compound capable of being bonded to the polyisocyanate compound (A)" can be selected from the same structures as those exemplified for the compound (B').

The structural unit derived from the polyisocyanate compound (A) is bonded to the structural unit derived from the hydroxyl group-containing polyfunctional (meth)acrylate (B) and the structural unit derived from the polyalkylene glycol (C) to form a urethane bond. This urethane bond may be substituted with a urea bond or an amide bond.

In the present invention, in the case of using the compound (B') or the compound (B") as the hydroxyl group-containing polyfunctional (meth)acrylate (B), or in the case of using the compound (C') as the polyalkylene glycol (C), to preferred aspects or specific aspects in these cases, those in the case of using the hydroxyl group-containing polyfunctional (meth)acrylate (B) or the polyalkylene glycol (C) described below can be similarly applied.

Hereinafter, each compound constituting the ultraviolet-curable oligomers represented as <1>, <2>, and <3> described above will be described. In the present invention, the "oligomer" is not a term limited to those having a specific molecular weight range or the like, and is any oligomer having a structure shown below.

The inkjet ink of the present invention may contain only one ultraviolet-curable oligomer or two or more ultraviolet-curable oligomers.

### Polyisocyanate Compound (A)

The polyisocyanate compound (A) is a compound having a total of two or more isocyanate groups in one molecule.

The type of the polyisocyanate compound (A) is not particularly limited, and examples thereof include a chain aliphatic polyisocyanate, an aromatic polyisocyanate, and an alicyclic polyisocyanate. Among these, the polyisocyanate compound (A) preferably includes a trimer compound of polyisocyanate from the viewpoints of weather resistance and hardness.

In the ultraviolet-curable oligomer, these polyisocyanate compounds (A) may be used singly or in combination of two or more types thereof. The polyisocyanate compound (A) to be used may also be a polyisocyanate having two or more structures among a chain aliphatic structure, an aromatic structure, and an alicyclic structure.

The polyisocyanate compound (A) preferably has 3 or more isocyanate groups and preferably has 6 or less isocyanate groups from the viewpoint of adhesiveness to a substrate. The polyisocyanate compound (A) is preferably a trimer obtained by a trimerization reaction of hexamethylene diisocyanate, trimethylhexamethylene diisocyanate, phenylene diisocyanate, or the like, and is particularly preferably a trimer of hexamethylene diisocyanate.

### Compound Containing Polymerizable Unsaturated Bond

In the compound containing a polymerizable unsaturated bond, the number of polymerizable unsaturated bonds is preferably one or more, more preferably 2 or more, and still more preferably 4 or more, and preferably 8 or less and more preferably 6 or less.

The compound containing a polymerizable unsaturated bond is preferably a compound capable of being bonded to the polyisocyanate compound (A).

### Compound (B')

The compound (B') is a compound containing two or more polymerizable unsaturated bonds and capable of being bonded to the polyisocyanate compound (A).

Examples of the compound (B') include compounds having any of a hydroxyl group, an amino group, and a carboxy group. Examples of the compound (B') also include a polyfunctional vinyl monomer, a polyfunctional allyl monomer, and a polyfunctional (meth)acrylate. Among these, the compound (B') is preferably a hydroxyl group-containing polyfunctional (meth)acrylate (B).

### Hydroxyl Group-Containing Polyfunctional (Meth)acrylate (B)

The hydroxyl group-containing polyfunctional (meth)acrylate (B) has one or more hydroxyl groups and two or more (meth)acryloyl groups. A specific example of the hydroxyl group-containing polyfunctional (meth)acrylate (B) includes a partial (meth)acrylic ester of a polyhydric alcohol. The polyfunctional (meth)acrylate having a hydroxyl group forms a favorable crosslinked structure by the participation of a plurality of (meth)acryloyl groups in its curing reaction, and can provide favorable physical properties, such as stain resistance and abrasion resistance.

The number of hydroxyl groups in the hydroxyl group-containing polyfunctional (meth)acrylate (B) is preferably 3 or less, more preferably 2 or less, and even more preferably 1. The number of (meth)acryloyl groups in the hydroxyl group-containing polyfunctional (meth)acrylate (B) is preferably 8 or less and more preferably 6 or less.

In the production of the ultraviolet-curable oligomer, these hydroxyl group-containing polyfunctional (meth)acrylates (B) may be used singly or in combination of two or more types thereof.

The hydroxyl group-containing polyfunctional (meth)acrylate (B) preferably has one hydroxyl group and 3 or more and 5 or less (meth)acryloyl groups, particularly from the viewpoint of the coating film strength of the cured film to be produced, and the hydroxyl group-containing polyfunctional (meth)acrylate (B) is preferably, for example, dipentaerythritol penta(meth)acrylate or pentaerythritol tri(meth)acrylate. Dipentaerythritol penta(meth)acrylate is particularly preferable as the hydroxyl group-containing polyfunctional (meth)acrylate (B) because a favorable crosslinked structure is formed to enhance the mechanical strength of a cured film.

### Water-Soluble Compound

### Compound (C')

The compound (C') is a water-soluble compound that can be bonded to the polyisocyanate compound (A).

The compound (C') is preferably a compound containing one hydroxyl end group because this provides favorable dispersibility.

As described above, examples of the compound (C') include water-soluble polymers, and among these, a polyalkylene glycol (C) is particularly preferable.

The polyalkylene glycol (C) is not limited, and a mono-substituted structure is preferable. That is, one hydroxyl group of the glycol is preferably substituted. The substituted structure is preferably a structure that is not bonded to an isocyanate.

The polyalkylene glycol (C) may be a mixture of a compound having a mono-substituted structure and a compound not having a mono-substituted structure.

The mono-substituted structure is not limited, but from the viewpoint of providing a nonionic ultraviolet-curable oligomer, the mono-substituted structure is preferably a polyalkylene glycol-mono-substituted ether, more preferably a polyethylene glycol mono-substituted ether, a polytrimethylene glycol mono-substituted ether, or a polypropylene glycol mono-substituted ether, and still more preferably a polyethylene glycol mono-substituted ether.

Among the polyalkylene glycol mono-substituted ethers, a polyalkylene glycol mono-substituted ether free of an ionic substituent in the ether moiety is more preferable. For example, a compound represented by Formula (1) below is even more preferred as the polyalkylene glycol mono-substituted ether.

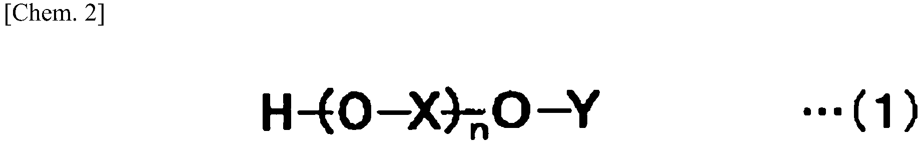

(In Formula (1), X is an alkylene group; Y is any of an alkyl group, a (meth)acryloyl group, an allyl group, an acyl group, and a hydrogen atom; and n is an integer of 2 or more.)

X in Formula (1) is preferably an alkylene group having one or more and 3 or less carbons and more preferably an ethylene group, a trimethylene group, or a propylene group. From the viewpoint of pigment dispersion stability or storage stability at elevated temperatures, X in Formula (1) is still more preferably an ethylene group.

From the viewpoint of the coating film strength, Y is preferably a (meth)acryloyl group, an allyl group, or an acyl group, and more preferably an allyl group.

From the viewpoint of the coating film strength of the cured film to be produced, n in Formula (1) is usually 2 or more, preferably 5 or more, and more preferably 6 or more, and usually 500 or less, preferably 100 or less, and more preferably 50 or less.

In the production of the ultraviolet-curable oligomer, these polyalkylene glycols (C) may be used singly or in combination of two or more types thereof.

The polyalkylene glycol (C) may be a mixture of polyalkylene glycols with different molecular weights (compounds with different n in Formula (1)).

### Average Particle Size

In the inkjet ink of the present invention, the polymerizable compound is preferably present in the form of particles.

When the polymerizable compound is present in the form of particles in the inkjet ink, the ink does not excessively permeate into a recording medium and is likely to remain in the vicinity of the surface even when the recording medium is an absorptive recording medium. As a result, a decrease in image density can be suppressed, and a coating film having excellent washing fastness can be formed.

In particular, in the inkjet ink, the polymerizable compound is more preferably present in the form of particles having an average particle size of 10 nm or more and 200 nm or less and still more preferably present in the form of particles having an average particle size of 20 nm or more and 150 nm or less.

The polymerizable compound having an average particle size within the above-described range has favorable dispersion stability.

The average particle size of the polymerizable compound is, for example, a volume average particle size (D₅₀) measured with a particle size measuring device by a dynamic light scattering method.

In Examples described below, the average particle size of polymerizable compound particles in a water dispersion of the polymerizable compound is measured, but the average particle size of the polymerizable compound particles in this water dispersion is substantially equal to the average particle size of the polymerizable compound particles in the ink.

In the present invention, as long as the polymerizable compound is present in the form of particles, even when the particles are aggregated or another substance is contained in the particles, such states are included in the state where the polymerizable compound is "present in the form of particles" described above.

The average particle size of the polymerizable compound described above means the particle size (primary particle size) of the polymerizable compound particles.

The inkjet ink of the present invention preferably contains a water-insoluble polymerizable compound from the viewpoint of enhancing the water resistance of a cured product. Here, the term "water-insoluble" means that the solubility of the polymerizable compound to water at 25°C is less than 0.01 g/mL. The solubility to water can be adjusted by the type and content of a hydrophilic functional group of the polymerizable compound.

The water-insoluble polymerizable compound can be present in the form of particles in the aqueous medium. However, an aqueous ink containing the polymerizable compound particles is likely to cause nozzle clogging, and there is a concern that the ejection stability of the ink may be deteriorated. This is because the polymerizable compound is only dispersed in the aqueous medium and is not dissolved, and thus, the polymerizable compound is easily precipitated in a nozzle portion of an inkjet head. In addition, when the ink is solidified at an ejection port of the nozzle, it is difficult to wash out the ink with water.

Therefore, in a case where the polymerizable compound is present in the form of particles in the inkjet ink, it is particularly important to suppress evaporation of the aqueous medium in the ink application step [a], and the effects of the present invention can be more effectively obtained.

Hereinafter, components other than the polymerizable compound contained in the inkjet ink of the present invention will be described.

### Colorant

The inkjet ink to be used in the inkjet recording method of the present invention may contain a colorant.

The colorant to be used in the inkjet ink, which is various dyes or pigments publicly known as colorants and used in inks, can be used. From the viewpoints of irradiation with an active energy ray and long-term storage durability of printed images, the inkjet ink of the present invention preferably contains a pigment as the colorant.

### Dye

The dye that can be used in the present invention is not particularly limited, and examples thereof include water-soluble dyes such as acid dyes, direct dyes, and reactive dyes, as well as disperse dyes. Among these, anionic dyes are preferable.

### Water-Soluble Dye

Examples of the water-soluble dye include azo dyes, methine dyes, azomethine dyes, xanthene dyes, quinone dyes, phthalocyanine dyes, triphenylmethane dyes, and diphenylmethane dyes.

### Pigment

The pigment to be used may be a publicly known organic and an inorganic pigment. Examples thereof include azo pigments, such as azo lakes, insoluble azo pigments, condensed azo pigments, and chelate azo pigments; polycyclic pigments, such as phthalocyanine pigments, perylene and perylene pigments, anthraquinone pigments, quinacridone pigments, dioxazine pigments, thioindigo pigments, isoindolinone pigments, and quinophthalone pigments; dye lakes, such as basic dye lakes and acid dye lakes; organic pigments, such as nitro pigments, nitroso pigments, aniline black, and daylight fluorescent pigments; and inorganic pigments, such as carbon black, titanium oxide, and iron oxide-based pigments. As the pigment, an anionic pigment is preferable.

These dyes and pigments may be used singly or in combination of two or more types thereof.

### Aqueous Medium

The inkjet ink of the present invention is an aqueous ink. The "aqueous ink" means an ink containing an aqueous medium. The aqueous medium is water and/or a water-soluble organic solvent.

The aqueous medium to be used in the present invention is preferably water or a mixture of water and a water-soluble organic solvent.

The water-soluble organic solvent includes a solvent that functions as a moisturizing solvent for increasing the moisture retention and wettability of the ink, and a solvent that is used as an aqueous medium for adjusting the viscosity of the ink and improving its handleability and ejection properties. The two types are not clearly distinguished from each other, and a water-soluble organic solvent used as a moisturizing solvent also functions as an aqueous medium.

In the present invention, the term water-soluble organic solvent means a compound having solubility in water. The solubility of the water-soluble organic solvent to water is not limited, but a compound that can be dissolved in water at any ratio is preferred. In addition, even a compound that is unlikely to have the characteristics of a solvent by itself (e.g., a compound that is a solid or has a high viscosity at an ordinary temperature) is included in the scope of water-soluble organic solvents as long as the compound can be used as a solvent by being uniformly mixed with water.

Examples of the water-soluble organic solvent include a polyhydric alcohol; ethers such as a polyhydric alcohol alkyl ether and a polyhydric alcohol aryl ether; a nitrogen-containing heterocyclic compound; an amide; an amine; and a sulfur-containing compound.

Specific examples of the water-soluble organic solvent include polyhydric alcohols such as ethylene glycol, diethylene glycol, 1,2-propanediol (propylene glycol), 1,3-propanediol, 1,2-butanediol, 1,3-butanediol, 1,4-butanediol, 2,3-butanediol, 3-methyl-1,3-butanediol, triethylene glycol, polyethylene glycol, polypropylene glycol, 1,2-pentanediol, 1,3-pentanediol, 1,4-pentanediol, 2,4-pentanediol, 1,5-pentanediol, 1,2-hexanediol, 1,6-hexanediol, 1,3-hexanediol, 2,5-hexanediol, 1,5-hexanediol, glycerin, 1,2,6-hexanetriol, 2-ethyl-1,3-hexanediol, ethyl-1,2,4-butanetriol, 1,2,3-butanetriol, 2,2,4-trimethyl-1,3-pentanediol, and petriol; polyhydric alcohol alkyl ethers such as ethylene glycol monoethyl ether, ethylene glycol monobutyl ether, diethylene glycol monomethyl ether, diethylene glycol monoethyl ether, diethylene glycol monobutyl ether, diethylene glycol ethyl methyl ether, tetraethylene glycol monomethyl ether, propylene glycol monomethyl ether, and propylene glycol monoethyl ether; polyhydric alcohol aryl ethers such as ethylene glycol monophenyl ether and ethylene glycol monobenzyl ether; nitrogen-containing heterocyclic compounds such as 2-pyrrolidone, N-methyl-2-pyrrolidone, N-hydroxyethyl-2-pyrrolidone, 1,3-dimethyl-2-imidazolidinone, ε-caprolactam, and γ-butyrolactone; amides such as formamide, N-methylformamide, N,N-dimethylformamide, 3-methoxy-N,N-dimethylpropionamide, and 3-butoxy-N,N-dimethylpropionamide; amines such as monoethanolamine, diethanolamine, and triethylamine; sulfur-containing compounds such as dimethyl sulfoxide, sulfolane, and thiodiethanol; propylene carbonate, and ethylene carbonate.

Among these, propylene glycol and diethylene glycol ethyl methyl ether are preferable.

As the water-soluble organic solvent, an organic solvent having a boiling point of 250°C or lower is preferably used because not only does such an organic solvent function as a moisture-retention solvent but favorable drying properties are also obtained.

As the water-soluble organic solvent, a polyol compound having 8 or more carbons and a glycol ether compound are also suitably used.

Specific examples of the polyol compound having 8 or more carbons include 2-ethyl-1,3-hexanediol and 2,2,4-trimethyl-1,3-pentanediol.

Specific examples of the glycol ether compound include polyhydric alcohol alkyl ethers such as ethylene glycol monoethyl ether, ethylene glycol monobutyl ether, diethylene glycol monomethyl ether, diethylene glycol monoethyl ether, diethylene glycol monobutyl ether, diethylene glycol monoisobutyl ether, tetraethylene glycol monomethyl ether, and propylene glycol monoethyl ether; and polyhydric alcohol aryl ethers such as ethylene glycol monophenyl ether and ethylene glycol monobenzyl ether.

These water-soluble organic solvents may be used singly or in combination of two or more types thereof.

### Polymerization Initiator

The inkjet ink of the present invention contains a polymerization initiator.

The polymerization initiator is a photoradical polymerization initiator that generates radicals, which are active species, by energy of light (ultraviolet ray) received due to active energy ray irradiation and initiates photopolymerization of the polymerizable compound. Thus, the ink present on a surface of the recording medium is cured to be able to form an image.

The polymerization initiator may be contained in the ink in a state of not being incorporated within the polymerizable compound or may be contained in the ink in a state of being incorporated in the particles of the polymerizable compound. The polymerization initiator may be further contained in both of these states.

The polymerization initiator may be a fat-soluble polymerization initiator (which may hereinafter be referred to as a "fat-soluble initiator") or a water-soluble polymerization initiator (which may hereinafter be referred to as a "water-soluble initiator").

Here, the "fat-soluble initiator" refers to a polymerization initiator that is compatible with the polymerizable compound, such as an ultraviolet-curable oligomer, and is dissolved in an organic solvent. The "water-soluble initiator" refers to an initiator that is dissolved in water in an amount of 1 mass% or more. The same applies to a "fat-soluble sensitizer" and a "water-soluble sensitizer" described below.

Examples of the polymerization initiator to be used in the present invention include, but are not limited to, aromatic ketones, acylphosphine oxide compounds, aromatic onium salt compounds, organic peroxides, thio compounds (thioxanthone compounds, thiophenyl group-containing compounds), α-aminoalkylphenone compounds, hexaarylbiimidazole compounds, ketoxime ester compounds, borate compounds, azinium compounds, metallocene compounds, active ester compounds, compounds having a carbon-halogen bond, and alkylamine compounds.

Among these, the polymerization initiator preferably contains at least any of an acylphosphine oxide compound and a thioxanthone compound. Using such a polymerization initiator tends to be able to provide even better curability of the ink.

Examples of the fat-soluble polymerization initiator include, but are not limited to, acetophenone, 2,2-diethoxyacetophenone, p-dimethylaminoacetophenone, benzophenone, 2-chlorobenzophenone, p,p'-dichlorobenzophenone, p,p'-bisdiethylaminobenzophenone, Michler's ketone, benzyl, benzoin, benzoin methyl ether, benzoin ethyl ether, benzoin isopropyl ether, benzoin-n-propyl ether, benzoin isobutyl ether, benzoin-n-butyl ether, benzyl methyl ketal, 2,2-dimethoxy-1,2-diphenylethan-1-one, 1-hydroxycyclohexyl phenyl ketone, 2-hydroxy-1-{4-[4-(2-hydroxy-2-methylpropionyl)benzyl]phenyl} 2-methylpropan-1-one, 2-benzyl-2-dimethylamino-1-(4-morpholinophenyl)butanone-1,2-dimethylamino-2-(4-methylbenzyl)-1-(4-morpholin-4-yl-phenyl)butan-1-one, 2,4,6-trimethylbenzoyl diphenylphosphine oxide, bis(2,4,6-trimethylbenzoyl)phenylphosphine oxide, bis(2,6-dimethoxybenzoyl)-2,4,4-trimethylpentylphosphine oxide, 2-methyl-1-[4-(methylthio)phenyl] 2-morpholinopropan-1-one, thioxanthone, 2-chlorothioxanthone, 2-methylthioxanthone, 2-isopropylthioxanthone, 4-isopropylthioxanthone, 2-hydroxy-2-methyl-1-phenyl-1-one, 1-(4-isopropylphenyl)-2-hydroxy-2-methylpropan-1-one, methyl benzoylformate, azobisisobutyronitrile, benzoyl peroxide, and di-tert-butyl peroxide.

Examples of the water-soluble polymerization initiator include, but are not limited to, 1-[4-(2-hydroxyethoxy)-phenyl]-2-hydroxy-2-methyl-1-propan-1-one, sodium phenyl(2,4,6-trimethylbenzoyl) phosphinate, and 2-(3-dimethylamino-2-hydroxypropoxy)-3,4-dimethyl-9H-thioxanthon-9-one methochloride.

Examples of commercially available products of the polymerization initiator include GENOPOL TX-2 available from RAHN AG; and Irgacure (trade name) 369, Irgacure (trade name) 500, and Irgacure (trade name) 2959 available from BASF Japan Ltd.

The polymerization initiator may be used singly or in combination of two or more types thereof. For example, a fat-soluble initiator and a water-soluble initiator may be combined for use, the fat-soluble initiator may be incorporated in the particles of the polymerizable compound, such as an ultraviolet-curable oligomer, and the water-soluble initiator may be dissolved in an aqueous medium.

The polymerization initiator may be combined for use with a thermal radical polymerization initiator in addition to the photoradical polymerization initiator as described above.

### Surfactant

The inkjet ink of the present invention preferably contains a surfactant for the flatness of the coating film to be formed and the wettability with a substrate.

The surfactant which is any of a silicone-based surfactant, a fluorine-based surfactant, an amphoteric surfactant, a nonionic surfactant, and an anionic surfactant can be used.

The silicone-based surfactant is not particularly limited and may be appropriately selected according to the purpose. Among such surfactants, a surfactant that is not decomposed even at a high pH is preferable, and examples thereof include side chain-modified polydimethylsiloxane, both end-modified polydimethylsiloxane, one end-modified polydimethylsiloxane, and side chain and both end-modified polydimethylsiloxane. A silicone-based surfactant having a polyoxyethylene group or a polyoxyethylene polyoxypropylene group as a modifying group is particularly preferred because such a surfactant exhibits favorable properties as an aqueous surfactant.

As the silicone-based surfactant, a polyether-modified silicone-based surfactant can also be used. Examples of the polyether-modified silicone-based surfactant include a compound in which a polyalkylene oxide structure is introduced into a side chain of a Si moiety of dimethylsiloxane.

The fluorine-based surfactant is preferably a compound having 2 or more and 16 or less carbons and being substituted with fluorine, and more preferably a compound having 4 or more and 16 or less carbons and being substituted with fluorine.

The fluorine-based surfactant is preferably, for example, a perfluoroalkyl sulfonic acid compound, a perfluoroalkyl carboxylic acid compound, a perfluoroalkyl phosphate compound, a perfluoroalkyl alkylene oxide adduct, and a polyoxyalkylene ether polymer compound having a perfluoroalkyl ether group in a side chain, because their foaming properties are low.

Examples of the perfluoroalkyl sulfonic acid compound include a perfluoroalkyl sulfonic acid and a perfluoroalkyl sulfonate salt.

Examples of the perfluoroalkyl carboxylic acid compound include a perfluoroalkyl carboxylic acid and a perfluoroalkyl carboxylate salt.

Examples of the perfluoroalkyl phosphate compound include a perfluoroalkyl phosphate and a perfluoroalkyl phosphate salt.

Examples of the perfluoroalkyl alkylene oxide adduct include a perfluoroalkyl ethylene oxide adduct.

Examples of the polyoxyalkylene ether polymer compound having a perfluoroalkyl ether group in a side chain include a sulfate salt of a polyoxyalkylene ether polymer having a perfluoroalkyl ether group in a side chain, and a salt of a polyoxyalkylene ether polymer having a perfluoroalkyl ether group in a side chain.

Examples of counter ions of the salts of these fluorine-based surfactants include Li, Na, K, NH₄, NH₃CH₂CH₂OH, NH₂(CH₂CH₂OH)₂, and NH(CH₂CH₂OH)₃.

Among these, a polyoxyalkylene ether polymer compound having a perfluoroalkyl ether group in a side chain is more preferred because of its particularly low foaming property, and fluorine-based surfactants represented by Formulae (3A) and (3B) below are particularly preferred.

CF₃CF₂(CF₂CF₂)ₛ-CH₂CH₂O(CH₂CH₂O)ₜH ... (3A)

In the compound represented by Formula (3A), in order to impart water solubility, s is preferably an integer of 0 or more and 10 or less, and t is preferably an integer of 0 or more and 40 or less.

CᵣF₂ᵣ₊₁-CH₂CH(OH)CH₂-O-(CH₂CH₂O)_{c}-Z ... (3B)

In the compound represented by Formula (3B), Z is H, C_{d}F_{2d+1}, CH₂CH(OH)CH₂-CₑF₂ₑ₊₁, or C_{f}H_{2f+1}. d in C_{d}F_{2d+1} is an integer of 1 or more and 6 or less. e in CH₂CH(OH)CH₂-CₑF₂ₑ₊₁ is an integer of 4 or more and 6 or less. f in C_{f}H_{2f+1} is an integer of 1 or more and 19 or less. r is an integer of 1 or more and 6 or less. c is an integer of 4 or more and 14 or less.

The fluorine-based surfactant to be used may be a commercially available product. Examples of the commercially available products include Surflon (trade name) S-111, S-112, S-113, S-121, S-131, S-132, S-141, and S-145 (all available from Asahi Glass Co., Ltd.); Fluorad FC-93, FC-95, FC-98, FC-129, FC-135, FC-170C, FC-430, and FC-431 (all available from Sumitomo 3M Ltd.); MEGAFACE F-470, F-1405, and F-474 (all available from DIC Corporation); Zonyl TBS, FSP, FSA, FSN-100, FSN, FSO-100, FSO, FS-300, and UR (all available from DuPont de Nemours, Inc.); FT-110, FT-250, FT-251, FT-400S, FT-150, FT-400SW (all available from Neos Corporation); Polyfox PF-136A, PF-156A, PF-151N, PF-154, and PF-159 (available from OMNOVA Solutions Inc.); Neugen FN-1287 (available from DKS Co. Ltd.); UNIDYNE DSN-403N (available from Daikin Industries, Ltd.); and LE-604, LE-605, LE-606, and LE-607 (available from Kyoeisha Chemical Co., Ltd.).

Examples of the amphoteric surfactant include lauryl aminopropionate salts, lauryl dimethyl betaine, stearyl dimethyl betaine, and lauryl dihydroxyethyl betaine.

Examples of the nonionic surfactant include polyoxyethylene alkylphenyl ethers, polyoxyethylene alkyl esters, polyoxyethylene alkylamines, polyoxyethylene alkylamides, polyoxyethylene propylene block polymers, sorbitan fatty acid esters, polyoxyethylene sorbitan fatty acid esters, acetylene alcohol derivatives, and acetylene glycol derivatives.

Examples of the anionic surfactant include polyoxyethylene alkyl ether acetate salts, dodecylbenzene sulfonate salts, laurate salts, and polyoxyethylene alkyl ether sulfate salts.

These surfactants may be used singly or in combination of two or more types thereof.

As described above, the silicone-based surfactant is not particularly limited and appropriately selected depending on the purpose, and a particularly preferred example thereof includes a polyether-modified silicone-based surfactant having a polyoxyethylene group or a polyoxyethylene polyoxypropylene group as a modifying group because it exhibits favorable properties as an aqueous surfactant.

As such a surfactant, a surfactant which has been appropriately synthesized may be used, or a commercially available product may be used. The commercially available product can be available, for example, from BYK Japan K. K., Shin-Etsu Chemical Co., Ltd., Dow Corning Toray Silicone Co., Ltd., Nihon Emulsion Co., Ltd., Kyoeisha Chemical Co., Ltd, and the like.

The polyether-modified silicone-based surfactant is not particularly limited and may be appropriately selected according to the intended purpose. An example thereof includes a compound represented by Formula (2) below, in which a polyalkylene oxide structure is introduced into a side chain of a Si moiety of dimethylpolysiloxane.

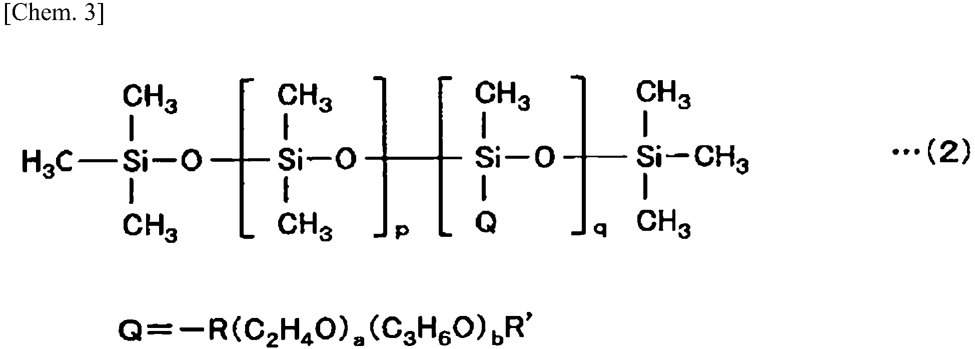

(In Formula (2), p, q, a, and b represent integers; and R and R' represent a hydrocarbon group.)

The polyether-modified silicone-based surfactant which is a commercially available product can be used. Examples of the commercially available products include KF-618, KF-642, and KF-643 (Shin-Etsu Chemical Co., Ltd.); SAG001, SAG002, SAG003, SAG005, SAG503, and SAG008 (Nissin Chemical Co., Ltd.); EMALEX-SS-5602 and SS-1906EX (Nihon Emulsion Co., Ltd.); FZ-2105, FZ-2118, FZ-2154, FZ-2161, FZ-2162, FZ-2163, and FZ-2164 (Dow Corning Toray Silicone Co., Ltd.); BYK-347, BYK-348, and BYK-349 (BYK Japan K. K.); and TSF4440, TSF4452, and TSF4453 (Toshiba Silicone Co., Ltd.).

### Sensitizer

The inkjet ink of the present invention may contain a sensitizer.

When present together with a polymerization initiator in the ink, a sensitizer absorbs an active energy ray and becomes excited, and upon contact with the polymerization initiator, the excited sensitizer promotes the decomposition of the polymerization initiator, enabling a more sensitive curing reaction.

The sensitizer may be fat-soluble or water-soluble as in the case of the polymerization initiator. The fat-soluble sensitizer can be incorporated in particles of the polymerizable compound, such as an ultraviolet-curable oligomer.

Examples of the sensitizer include aliphatic amines; amines having an aromatic group; or a cyclic amine-based compound, such as piperidine; thioxanthone compounds; alkoxyanthracene compounds; a urea-based compound, such as o-tolylthiourea; a sulfur compound, such as sodium diethylthiophosphate or a soluble salt of an aromatic sulfinic acid; a nitrile compound, such as N,N'-disubstituted-p-aminobenzonitrile; a phosphorus compound, such as tri-n-butylphosphine or sodium diethyldithiophosphate; Michler's ketone; N-nitrosohydroxylamine derivatives; and nitrogen compounds, such as oxazolidine compounds, tetrahydro-1,3-oxazine compounds, and condensates of formaldehyde or acetaldehyde and a diamine.

These sensitizers may be used singly or in combination of two or more types thereof.

### Additional Resin Component

If necessary, the inkjet ink of the present invention can contain, in addition to the above-described components, an optional oligomer component besides the polymerizable compound, an optional resin component, or an optional monomer component (these are collectively referred to as "additional resin component"). The additional resin component may be encapsulated in the particles of the polymerizable compound, may be dissolved in an aqueous medium, or may be dispersed singly or in a state of being complexed with the other component in the ink.

### Additional Additive

If necessary, the inkjet ink of the present invention can contain an additional additive in addition to the above-described components.

Examples of the additional additive include publicly known additives such as an anti-fading agent, an emulsion stabilizer, a penetration enhancer, an ultraviolet absorber, a preservative, an antifungal agent, a rust inhibitor, a pH adjuster, a viscosity adjuster, a dispersant, a dispersion stabilizer, an antifoaming agent, a solid wetting agent, and a chelating agent. These various additives may be added directly after preparation of the ink or upon preparation of the ink.

For details of the additional additives, reference may be made to the descriptions in paragraphs [0088] to [0096] of JP 2010-65205 A and the descriptions in paragraphs [0083] to [0090] of JP 2010-70669 A.

### Content of Each Component

The content of water in the inkjet ink of the present invention is not particularly limited and can be appropriately selected according to the purpose. From the viewpoints of drying properties and ejection reliability of the ink, the content of water in the inkjet ink of the present invention is usually 10 mass% or more, preferably 20 mass% or more, and more preferably 40 mass% or more, and usually 90 mass% or less and preferably 80 mass% or less.

In a case in which the inkjet ink of the present invention contains a water-soluble organic solvent, the content (total content of the water-soluble organic solvent to be used also as a moisturizing solvent and the water-soluble organic solvent to be used as an aqueous medium) is not particularly limited and can be appropriately selected according to the type and purpose of the water-soluble organic solvent to be used. From the viewpoints of drying properties, ejection reliability, wettability with a substrate, and the like, the content of the water-soluble organic solvent in the inkjet ink of the present invention is usually 10 mass% or more, and usually 50 mass% or less and preferably 40 mass% or less.

The content of a volatile component relative to the total amount of the inkjet ink of the present invention is preferably 70 mass% or more and more preferably 75 mass% or more, and preferably 95 mass% or less and more preferably 90 mass% or less.

When the content of the volatile component is equal to or greater than the above-described lower limit, high ejection reliability is achieved. When the content of the volatile component is equal to or less than the above-described upper limit, coating film strength can be increased.

The volatile component in the inkjet ink of the present invention refers to a component, the amount of which is reduced by 90% or more compared to the amount before drying, after 1 g of the inkjet ink is placed on an aluminum dish having the diameter of 10 cm and dried at 80°C for 4 hours.

From the viewpoints of drying properties and ejection reliability, the inkjet ink of the present invention is prepared so that the concentration of total solid content, which is components other than the aqueous medium, which is water and/or a water-soluble organic solvent, is usually 5 mass% or more, preferably 7 mass% or more, and more preferably 9 mass% or more, and usually 30 mass% or less, preferably 25 mass% or less, and more preferably 20 mass% or less.

In the case of using a mixed liquid of water and a water-soluble organic solvent as the aqueous medium in the inkjet ink of the present invention, from the viewpoint of improving the drying properties and the ejection properties, the ratio of water to the water-soluble organic solvent (total of the water-soluble organic solvent to be used also as a moisturizing solvent and the water-soluble organic solvent to be used as the aqueous medium) is preferably such that the ratio of water to the water-soluble organic solvent is usually from 1:0.05 to 1:1.5 (mass ratio), preferably from 1:0.1 to 1:1.2 (mass ratio), and more preferably from 1:0.15 to 1:1.1 (mass ratio).

From the viewpoints of the performance of the printed coating film to be produced and the active energy ray curability, the content of the polymerizable compound in the inkjet ink of the present invention is usually 3 mass% or more, preferably 5 mass% or more, and more preferably 7 mass% or more. Meanwhile, from the viewpoint of ejection stability, the content of the polymerizable compound in the inkjet ink of the present invention is usually 20 mass% or less, preferably 15 mass% or less, and more preferably 12 mass% or less.

From the same viewpoints, the content of the polymerizable compound in the total solid content of the inkjet ink of the present invention is usually 30 mass% or more, preferably 50 mass% or more, and usually 90 mass% or less, preferably 85 mass% or less, and more preferably 80 mass% or less.

From the viewpoints of improvement of image density, favorable fixability, and ejection stability, the content of the colorant in the inkjet ink of the present invention is usually 0.1 mass% or more and preferably 1 mass% or more, and usually 8 mass% or less and preferably 6 mass% or less.

From the same viewpoints, the content of the colorant in the total solid content of the inkjet ink of the present invention is usually 1 mass% or more and preferably 5 mass% or more, and usually 40 mass% or less and preferably 30 mass% or less.

The content of the polymerization initiator in the inkjet ink of the present invention is usually 0.05 mass% or more, preferably 0.1 mass% or more, more preferably 0.3 mass% or more, and still more preferably 0.4 mass% or more, and usually 8 mass% or less, preferably 5 mass% or less, more preferably 3 mass% or less, still more preferably 2 mass% or less, and particularly preferably 1 mass% or less. The content of the polymerization initiator within this range allows sufficient improvement in a curing rate and prevention of incomplete dissolution of the polymerization initiator and coloration due to the polymerization initiator.

From the same viewpoints, the content of the polymerization initiator in the total solid content of the inkjet ink of the present invention is usually 0.5 mass% or more, preferably 1 mass% or more, more preferably 2 mass% or more, and still more preferably 3 mass% or more, and usually 20 mass% or less, more preferably 15 mass% or less, still more preferably 10 mass% or less, and particularly preferably 8 mass% or less.

When the inkjet ink of the present invention contains a surfactant, the content thereof is not particularly limited and can be appropriately selected depending on the purpose. From the viewpoints of excellent wettability and ejection stability, and improvement in image quality, the content of the surfactant in the ink is usually 0.001 mass% or more, preferably 0.01 mass% or more, and more preferably 0.03 mass% or more, and usually 5 mass% or less, preferably 3 mass% or less, and more preferably 1 mass% or less.

From the same viewpoints, the content of the surfactant in the total solid content of the inkjet ink of the present invention is usually 0.01 mass% or more, preferably 0.1 mass% or more, and more preferably 0.2 mass% or more, and usually 10 mass% or less, preferably 5 mass% or less, and more preferably 3 mass% or less.

When the inkjet ink of the present invention contains a sensitizer, the content thereof is usually 0.01 mass% or more, preferably 0.03 mass% or more, and more preferably 0.05 mass% or more, and usually 4 mass% or less, preferably 3 mass% or less, more preferably 1 mass% or less, and even more preferably 0.7 mass% or less. Within the above-described range of the content of the sensitizer, the effect of the sensitizer can be sufficiently achieved.

From the same viewpoint, the content of the sensitizer in the total solid content of the inkjet ink of the present invention is usually 0.05 mass% or more, preferably 0.1 mass% or more, more preferably 0.3 mass% or more, and still more preferably 0.5 mass% or more, and usually 8 mass% or less, preferably 6 mass% or less, and more preferably 5 mass% or less.

### Viscosity of Inkjet Ink

The viscosity of the inkjet ink of the present invention at 25°C is preferably 25 mPa·sec or less, more preferably 20 mPa·sec or less, and still more preferably 10 mPa·sec or less. The lower limit value of the viscosity of the inkjet ink of the present invention at 25°C is not particularly limited, but is preferably 1 mPa·sec or more, more preferably 2 mPa·sec or more, and still more preferably 5 mPa·sec or more.

The viscosity of the inkjet ink can be measured using a digital viscometer DV-I+ available from Brookfield Corporation.

### Inkjet Recording Apparatus

The inkjet recording apparatus of the present invention can be suitably used in various recording apparatuses using inkjet recording system, such as a printer, a facsimile machine, a copying machine, a multifunctional printer/facsimile/copier, a three-dimensional shaping apparatus, and the like.

In the present invention, the recording apparatus is an apparatus capable of ejecting ink, various treatment liquids, and the like onto a recording medium.

The recording apparatus may include not only a head portion that ejects ink, but also a means related to feeding, transport, and ejection of the recording medium, and additionally an apparatus referred to as a pre-processing apparatus or a post-processing apparatus, and the like.

An inkjet recording apparatus according to an embodiment of the present invention (hereinafter may be referred to as an "inkjet recording apparatus 1") is an inkjet recording apparatus to be used for recording an image onto an absorptive recording medium, characterized by including: an ink application means [c] that applies an inkjet ink to the absorptive recording medium without heating the absorptive recording medium, the inkjet ink containing a polymerizable compound, a polymerization initiator, and water; an irradiation means [d] that irradiates the inkjet ink applied to the absorptive recording medium with an active energy ray; and a heating means [e] that heats the absorptive recording medium upon the active energy ray irradiation, in which the irradiation means [d] and the heating means [e] are individually controllable.

An inkjet recording apparatus according to another embodiment of the present invention (hereinafter may be referred to as "inkjet recording apparatus 2") is an inkjet recording apparatus to be used for recording an image onto a recording medium, characterized by including: an ink application means [c] that applies an inkjet ink to the recording medium without heating the recording medium, the inkjet ink containing a polymerizable compound, a polymerization initiator, and water; an irradiation means [d] that irradiates the inkjet ink applied to the recording medium with an active energy ray; and a heating means [e] that heats the recording medium upon the active energy ray irradiation, in which the irradiation means [d] and the heating means [e] can be individually controlled, and the polymerizable compound is present in the form of particles in the inkjet ink.

The inkjet recording apparatus 1 and the inkjet recording apparatus 2 of the present invention (hereinafter these may be collectively referred to as "inkjet recording apparatus of the present invention") may further include a drying means that does not involve heating in order to promote evaporation of the aqueous medium contained in the ink. The drying means include, for example, a means for drying a printed surface and/or a back surface of the recording medium.

An example of the irradiation means [d] that irradiates an active energy ray in the inkjet recording apparatus of the present invention includes, as described above, a means using a light source, such as a halogen lamp, a metal halide lamp, an LED, or an LD. Among these, a light-emitting diode having an emission peak wavelength in a range from 350 to 420 nm is preferably used.

Preferred aspects of the recording medium, the ink application means [c], the heating means [e], and the inkjet ink are the same as those described above in the inkjet recording method.

The inkjet recording apparatus of the present invention is not limited to an apparatus that visualizes a significant image, such as a character or a figure, by ink. For example, the recording apparatus also includes an apparatus that forms a pattern, such as a geometric pattern, and an apparatus that shapes a three-dimensional image.

The recording apparatus includes not only a desktop type, but also a wide-format recording apparatus capable of printing on an A0 size recording medium, as well as a continuous form printer capable of using, for example, rolled continuous paper as a recording medium.

Furthermore, unless otherwise specified, the recording system of the recording apparatus or the irradiation system for the active energy ray includes both a shuttle system, in which recording or irradiation is performed while a serial head is moved, and a line system, in which recording is performed using a line head. For a shuttle system recording apparatus, reference can be made, for example, to JP 2022-181182 A and JP 2010-280828 A.

### Applications

The inkjet ink of the present invention to be used in the inkjet recording method and inkjet recording apparatus of the present invention is aqueous and thus has excellent environmental safety.

According to the inkjet recording method and inkjet recording apparatus of the present invention, a printed coating film with excellent coating film properties, in particular high washing fastness, can be formed by using the aqueous ink excellent in environmental safety.

Thus, the inkjet recording method and inkjet recording apparatus of the present invention can be suitably used for various applications including cloth for clothing, such as T-shirts; textiles that may get wet; wallpaper for interior use; and home furnishings.

### Examples

Hereinafter, Examples of the present invention will be described. However, the present invention is not limited to these Examples.

### Preparation of Ink

### Preparation of Aqueous Dispersion of Polymerizable Compound

A water-insoluble polymerizable compound (ultraviolet-curable oligomer) was produced by reacting 0.4 mol of a trimer of hexamethylene diisocyanate, 0.8 mol of dipentaerythritol pentaacrylate, and 0.4 mol of polyethylene glycol monoallyl ether (n = 30 to 40 in Formula (1) above).

While the polymerizable compound and a fat-soluble initiator (GENOPOL TX-2 available from RAHN AG) were mixed and stirred at 60°C at a ratio shown in Table 1, ion-exchanged water preliminarily heated to 60°C was added dropwise until the solid content concentration reached 20 mass% to prepare an aqueous dispersion.

The average particle size (D₅₀) of the ultraviolet-curable oligomer particles in this water dispersion was measured using a particle size distribution analyzer MICROTRAC WAVEII-EX150 (available from MicrotracBEL Corp.) and was found to be 29 nm.

### Preparation of Ink 1

Ion-exchanged water; the water dispersion of the polymerizable compound; propylene glycol (PG) and diethylene glycol ethyl methyl ether (EM) as water-soluble organic solvents; a water-soluble initiator 1; a water-soluble sensitizer 1; BYK-347 and BYK-349 (both of them were available from BYK Japan K. K.) as surfactants; and a dispersion of C. I. Pigment Blue 15:3 (described as "Cy" in Table 1) as a pigment dispersion were used, added, and mixed so as to give the composition ratio shown in Table 1 to prepare an ink 1.

The viscosity of the ink 1 at 25°C was 8 mPa·s.

### Preparation of Inks 2 to 4

Inks 2 to 4 were obtained in the same manner as the ink 1 except for changing the types and compounding proportions of the pigment dispersions, the compounding proportions of the water-soluble sensitizers, and the types and compounding proportions of the surfactants as shown in Table 1 below.

### Pigment Dispersion

C. I. Pigment Red 122 Dispersion (Ma in Table 1)
C. I. Pigment Yellow 155 Dispersion (Ye in Table 1)
C. I. Pigment Black 7 Dispersion (Bk in Table 1)

The viscosities of the inks 2 to 4 at 25°C were as follows, respectively.
Ink 2: Viscosity = 10 mPa·s
Ink 3: Viscosity = 7 mPa·s
Ink 4: Viscosity = 7 mPa·s

The content proportion of each component in Table 1 indicates the content rate of the component contained in the water dispersion or solution when the component is in the form of a water dispersion or solution.

**[Table 1]**

| | Ink composition liquid (mass%) | | | | | | | | | | | | |
|---|---|---|---|---|---|---|---|---|---|---|---|---|---|
| | Pigment | | | | Polymerizable compound | Water-soluble organic solvent | | Fat-soluble initiator | Water-soluble initiator | Water-soluble sensitizer | Surfactant | | Water |
| | Cy | Ma | Ye | Bk | | PG | EM | | | | BYK-347 | BYK-349 | |
| Ink 1 | 3.0 | | | | 10 | 10 | 10 | 0.1 | 0.5 | 0.4 | 0.12 | 0.1 | Balance |
| Ink 2 | | 3.5 | | | 10 | 10 | 10 | 0.1 | 0.5 | 0.4 | 0.12 | 0.1 | Balance |
| Ink 3 | | | 2.5 | | 10 | 10 | 10 | 0.1 | 0.5 | 0.4 | 0.12 | - | Balance |
| Ink 4 | | | | 2.5 | 10 | 10 | 10 | 0.1 | 0.5 | 0.4 | 0.12 | - | Balance |

### Examples 1 to 6 and Comparative Examples 1 to 3

The inks 1 to 4 as inkjet inks and cotton fabrics as recording media were set in a UV inkjet printer.

Step [a]: The ink application step was performed with the following settings.
Setting of Ink Application Step (Ink Application Means [c])
Resolution: 600 × 600 dpi
Number of passes: 8 passes
Image: 5 × 8 cm solid image

Thereafter, as the step [b]: irradiation step, the fabric after the ink application step was placed on a hot plate (heating means [e]) with a current density of 2 W/cm² set to a temperature shown in Table 2, and after 10 seconds, using an LED (irradiation means [d]) having an emission peak wavelength of 385 nm as an active energy ray source, the fabric was irradiated with ultraviolet light with irradiation energy of 7 J/cm² by adjusting the illumination shown in Table 2.

In Comparative Examples 1 to 3, heating by a hot plate was not performed. In the case of no heating, the temperature of the fabric upon active energy ray irradiation is room temperature (23°C).

### Evaluation of Washing Fastness

The printed coating films produced by the procedure described above was evaluated for washing fastness by the following method.

The printed coating film-attached fabrics produced in Examples 1 to 6 and Comparative Examples 1 to 3 were washed with water for 50 minutes in a washing machine, and a change in image density (ΔE) before and after washing was determined using a spectral density colorimeter (X-rite eXact Advanced, available from X-Rite Inc.) and evaluated as follows. ΔE was determined by the following formula.$ΔE = \sqrt{{\left(ΔL∗\right)}^{2} + {\left(Δa∗\right)}^{2} + {\left(Δb∗\right)}^{2}}$
⊚: ΔE is 2.0 or less for each color and is excellent in practical use.
○: ΔE is 3.0 or less for each color, and the fabric has no problem in practical use.
×: The fabric has a color with ΔE of more than 3.0 and has a problem in practical use.

The evaluation results are shown in Table 2.

The printed coating film portion was not hard or stiff in any of Examples 1 to 6 and Comparative Examples 1 to 3 and had the same texture as that of the fabric on which printing was not performed.

**[Table 2]**

| | Illuminance (W/cm²) | Irradiation step (presence or absence of heating) | ΔE | | | | Evaluation |
|---|---|---|---|---|---|---|---|
| | | | Ink 1 | Ink 2 | Ink 3 | Ink 4 | |
| Example 1 | 0.3 | UV irradiation with heating to 60°C | 1.7 | 1.9 | 0.8 | 0.9 | ⊚ |
| Example 2 | | UV irradiation with heating to 40°C | 1.8 | 3.0 | 2.1 | 1.9 | ○ |
| Comparative Example 1 | | UV irradiation without heating | 2.4 | 5.3 | 3.4 | 3.4 | × |
| Example 3 | 1 | UV irradiation with heating to 60°C | 1.8 | 1.9 | 0.7 | 1.0 | ⊚ |
| Example 4 | | UV irradiation with heating to 40°C | 2.8 | 2.7 | 1.2 | 1.2 | ○ |
| Comparative Example 2 | | UV irradiation without heating | 4.8 | 5.5 | 3.8 | 2.9 | × |
| Example 5 | 3 | UV irradiation with heating to 60°C | 2.0 | 2.0 | 1.0 | 1.0 | ⊚ |
| Example 6 | | UV irradiation with heating to 40°C | 2.2 | 2.9 | 1.4 | 1.7 | ○ |
| Comparative Example 3 | | UV irradiation without heating | 3.5 | 5.0 | 6.3 | 4.1 | × |

As can be seen from Table 2, according to the inkjet recording method and the inkjet recording apparatus of the present invention, a printed image with high washing fastness and excellent coating film strength can be formed while stable inkjet ejection is maintained.

In Examples described above, the inks 1 to 4 having the same polymerizable compound and polymerization initiator were used, but the same effects can be expected even with other inkjet inks, from the mechanism of maintaining stable inkjet ejection by the step [a] and the mechanism of suppressing the permeation of the inkjet ink into the recording medium by the step [b], resulting in the improvement of the washing fastness.

Although the present invention has been described in detail with reference to specific aspects, it will be apparent to those skilled in the art that various modifications can be made without departing from the spirit and scope of the present invention.

The present application is based on Japanese Patent Application JP 2023-193822 filed on November 14, 2023, which is incorporated by reference in its entirety.

## Claims

1. An inkjet recording method comprising a step [a] and a step [b] described below, wherein a recording medium is not heated in the step [a], the recording medium is heated by a heating means in the step [b], and the recording medium is an absorptive recording medium:
step [a]: an ink application step of applying, to a recording medium, an inkjet ink containing at least a polymerizable compound, a polymerization initiator, and water; and
step [b]: an irradiation step of irradiating the inkjet ink applied to the recording medium that has undergone at least the step [a] with an active energy ray controlled by a means different from the heating means.

2. An inkjet recording method comprising a step [a] and a step [b] described below, wherein a recording medium is not heated in the step [a], the recording medium is heated by a heating means in the step [b], and a polymerizable compound is present in the form of particles in an inkjet ink in the step [a]:
step [a]: an ink application step of applying, to a recording medium, an inkjet ink containing at least a polymerizable compound, a polymerization initiator, and water; and
step [b]: an irradiation step of irradiating the inkjet ink applied to the recording medium that has undergone at least the step [a] with an active energy ray controlled by a means different from the heating means.

3. The inkjet recording method according to claim 1 or 2, wherein a light source of the active energy ray is a light-emitting diode having an emission peak wavelength in a range of from 350 to 420 nm.

4. The inkjet recording method according to claim 1, wherein the absorptive recording medium is a fabric.

5. The inkjet recording method according to claim 2, wherein the particles have an average particle size of 10 nm or more and 200 nm or less.

6. The inkjet recording method according to claim 1 or 2, wherein the polymerizable compound contains a (meth)acrylate compound.

7. The inkjet recording method according to claim 1 or 2, wherein a heating temperature of the recording medium in the step [b] is 30°C or higher and 70°C or lower.

8. The inkjet recording method according to claim 1 or 2, wherein a heating element is used as the heating means.

9. The inkjet recording method according to claim 1 or 2, wherein, in the irradiation step [b], the recording medium is heated from a surface of the recording medium opposite to a surface to which the ink is applied.

10. An inkjet recording apparatus used for recording an image onto an absorptive recording medium, the apparatus comprising:
an ink application means [c] for applying, to the absorptive recording medium, an inkjet ink containing a polymerizable compound, a polymerization initiator, and water without heating the absorptive recording medium;
an irradiation means [d] for irradiating the inkjet ink applied to the absorptive recording medium with an active energy ray; and
a heating means [e] for heating the absorptive recording medium during irradiation with the active energy ray,
wherein the irradiation means [d] and the heating means [e] are individually controllable.

11. An inkjet recording apparatus used for recording an image onto a recording medium, the apparatus comprising:
an ink application means [c] for applying, to the recording medium, an inkjet ink containing a polymerizable compound, a polymerization initiator, and water without heating the recording medium;
an irradiation means [d] for irradiating the inkjet ink applied to the recording medium with an active energy ray; and
a heating means [e] for heating the recording medium during irradiation with the active energy ray,
wherein the irradiation means [d] and the heating means [e] are individually controllable, and
the polymerizable compound is present in the form of particles in the inkjet ink.

12. The inkjet recording apparatus according to claim 10 or 11, wherein a light source of the active energy ray is a light-emitting diode having an emission peak wavelength in a range of from 350 to 420 nm.

13. The inkjet recording apparatus according to claim 10, wherein the absorptive recording medium is a fabric.

14. The inkjet recording apparatus according to claim 11, wherein the particles have an average particle size of 10 nm or more and 200 nm or less.

15. The inkjet recording apparatus according to claim 10 or 11, wherein the polymerizable compound contains a (meth)acrylate compound.

16. The inkjet recording method according to claim 10 or 11, wherein a heating element is used as the heating means [e].

17. The inkjet recording apparatus according to claim 10 or 11, wherein the heating means [e] is located on a surface of the absorptive recording medium or the recording medium opposite to a surface to which the ink is applied.
